(19) Europäisches Patentamt
European Patent Office
Office européen des brevets

(11) **EP 3 614 577 A1**

(12) **EUROPEAN PATENT APPLICATION**

(43) Date of publication:
**26.02.2020 Bulletin 2020/09**

(51) Int Cl.:
***H04B 7/06*** *(2006.01)*

(21) Application number: **19190205.5**

(22) Date of filing: **28.02.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(62) Document number(s) of the earlier application(s) in accordance with Art. 76 EPC:
**17158429.5 / 3 367 588**

(71) Applicant: **Nokia Solutions and Networks Oy 02610 Espoo (FI)**

(72) Inventors:
• **NIDHAM, Ben Rached**
  **75017 Paris (FR)**

• **CAPDEVIELLE, Veronique**
  **78114 Magny Les Hameaux (FR)**

(74) Representative: **Nokia EPO representatives Nokia Technologies Oy Karakaari 7 02610 Espoo (FI)**

Remarks:
This application was filed on 06-08-2019 as a divisional application to the application mentioned under INID code 62.

(54) **METHOD AND COMPUTER-READABLE MEDIUM TO SELECT A PRECODING BEAM AMONG A SET OF POSSIBLE PRECODING BEAMS**

(57) Method and computer-readable medium to select a precoding beam among a set of possible precoding beams is described. This selected precoding beam is use to exchange data between a base station and a user equipment. The possible precoding beams are grouped according to their beamwidth out of a set of possible beamwidths. The method comprises an initial step of selecting one of the possible beamwidths so called selected beamwidth. The method also comprises the following iterative steps; a step of determining measurements associated to precoding beams having this selected beamwidth and a step of selecting the current precoding beam as the one, among the precoding beams having this selected beamwidth, with the best measurements and a step of updating the measurements associated to the precoding beams having the selected beamwidth. Furthermore and if one of the measurement associated to one of the precoding beams, having the selected beamwidth, is above the measurement associated to the current precoding beam, the method comprises a step of changing the current precoding beam to the one with the measurements above the measurements associated to the former current precoding beam and a step of updating a beam switching rate and when the beam switching rate is above a first threshold a step of increasing the selected beamwidth and when the beam switching rate is below a second threshold a step of decreasing the selected beamwidth.

Fig. 1

**Description**

FIELD OF INVENTION

The present subject matter relates to a method to select a precoding beam among a set of possible precoding beams. This precoding beam can for example be used to exchange data between a base station and a user equipment.

BACKGROUND

In order to combat path loss, and to maximize spectral efficiency, directional beamforming/precoding solutions are commonly used.

It is straightforward to state that the optimal beam pattern per user, is to be updated as the user moves and changes its location: spatial characteristics of the channel paths between the base station and the user, are modified. The beam tracking feature intends at switching the best precoding beam according the displacement of the user.

However, the higher the user's mobility or the evolution of the radio electrical environment of the user, the higher the rate of beam switching to guarantee steady beamforming gain. At the same time the risk for the user to move out of its beam coverage area is increasing and so the risk of connexion dropping.

The problem is critical for 5G massive MIMO beamforming in millimeters waves systems, due to narrow beamwidth and uncertainty in beam steering due to analog impairments in the radio frequency chain for example the phase noise.

The problem that is addressed is to design a precoding solution that suits to mobile use cases, by preventing call dropping, guaranteeing continuous coverage, taking into account the user mobility information, especially the speed.

The present subject matter also allows the stabilization of the beam tracking procedure, by reducing the beam switching rate, to decrease the beam misalignment probability, to reduce the overhead due to beam refinement protocol to save time and radio resources elements used for transmitting refined beam reference signals, while increasing the beamforming gain, through minimal beamwidth.

SUMMARY

This summary is provided to introduce concepts related to methods dedicated to select a precoding beam among a set of possible precoding beams.

In one implementation a method to select a precoding beam among a set of possible precoding beams is described. This selected precoding beam is use to exchange data between a base station and a user equipment. The possible precoding beams are grouped according to their beamwidth out of a set of possible beamwidths. The method comprises an initial step of selecting one of the possible beamwidths so called selected beamwidth. The method also comprises the following iterative steps; a step of determining measurements associated to precoding beams having this selected beamwidth and a step of selecting the current precoding beam as the one, among the precoding beams having this selected beamwidth, with the best measurements and a step of updating the measurements associated to the precoding beams having the selected beamwidth. Furthermore and if one of the measurement associated to one of the precoding beams, having the selected beamwidth, is above the measurement associated to the current precoding beam, the method comprises a step of changing the current precoding beam to the one with the measurements above the measurements associated to the former current precoding beam and a step of updating a beam switching rate and when the beam switching rate is above a first threshold a step of increasing the selected beamwidth and when the beam switching rate is below a second threshold a step of decreasing the selected beamwidth.

In another implementation a computer-readable medium is described. This computer-readable medium has embodied a computer program configured to realize a method to select a precoding beam among a set of possible precoding beams. This selected precoding beam is use to exchange data between a base station and a user equipment. The possible precoding beams are grouped according to their beamwidth out of a set of possible beamwidths. The method comprises an initial step of selecting one of the possible beamwidths so called selected beamwidth. The method also comprises the following iterative steps; a step of determining measurements associated to precoding beams having this selected beamwidth and a step of selecting the current precoding beam as the one, among the precoding beams having this selected beamwidth, with the best measurements and a step of updating the measurements associated to the precoding beams having the selected beamwidth. Furthermore and if one of the measurement associated to one of the precoding beams, having the selected beamwidth, is above the measurement associated to the current precoding beam, the method comprises a step of changing the current precoding beam to the one with the measurements above the measurements associated to the former current precoding beam and a step of updating a beam switching rate and when the beam switching rate is above a first threshold a step of increasing the selected beamwidth and when the beam switching rate is below a second threshold a step of decreasing the selected beamwidth.

BRIEF DESCRIPTION OF THE FIGURES

The detailed description is given with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Figure 1 presents a first embodiment of the method of the present subject matter.

Figure 2 presents a beam resolution or beamwidth table

Figure 3 presents a method, from the point of view of the user equipment, to exchange information between a user equipment and a base station in order to select a precoding beam

Figure 4 presents the method of the figure 3, from the point of view of the base station

In the present document, the word "exemplary" is used herein to mean "serving as an example, instance, or illustration." Any embodiment or implementation of the present subject matter described herein as "exemplary" is not necessarily to be construed as preferred or advantageous over other embodiments.
It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

DESCRIPTION OF EMBODIMENTS

The aim of the present subject matter is a method to select a precoding beam among a set of possible precoding beams. The different possible precoding beams are grouped according to their beamwidth and generally there are several possible precoding beams for a given beamwidth. The selected precoding beam will be used to exchange data between a base station and a user equipment.

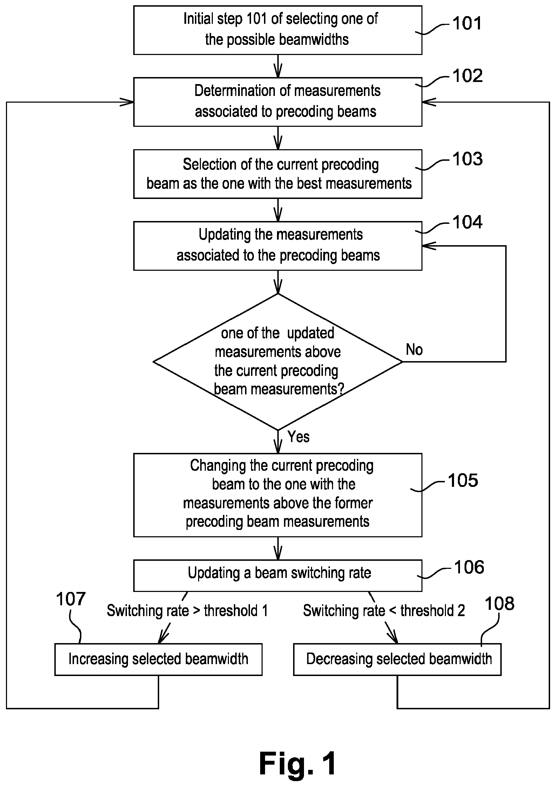

The figure 1 describes the method to select the precoding beam. This method comprises an initial step 101 of selecting one of the possible beamwidths. After that the method comprises the following iterative steps:

- a step 102 of determining measurements associated to precoding beams having this selected beamwidth and
- a step 103 of selecting the current precoding beam as the one, among the precoding beams having this selected beamwidth, with the best measurement and
- a step 104 of updating the measurements associated to the precoding beams having the selected beamwidth and

Furthermore and if one of the measurement associated to one of the precoding beams, having the selected beamwidth, is above the measurement associated to the current precoding beam, the method comprising

- a step 105 of changing the current precoding beam to the one with the measurements above the measurements associated to the former current precoding beam
- a step 106 of updating a beam switching rate and

    - when the beam switching rate is above a first threshold a step 107 of increasing the selected beamwidth

    - when the beam switching rate is below a second threshold a step 108 of decreasing the selected beamwidth

Beamwidth is also known as resolution of the beam.
In an embodiment the initial 101 step of selecting one of the possible beamwidths is configured to select the largest beamwidth. In an embodiment the base station transmits Beam Reference Signals over beams with largest beamwidth. The user equipement then measures the power that is received over the scanned reference signals and then reports to the base station the beam index and maximum received power to the base station.
Regarding the first threshold, a too low value will trigger unusually the beamwidth increase process, which degrades the expected beamforming gain. In opposite a too high value will have an impact on beam misalignment.

Regarding the second threshold a too low value will limit the opportunity of refining the beamwidth, which negatively impacts the beamforming gain. In opposite a too high value increases too 'optimistically' the opportunity of beam refining, which leads to beam misalignment and call drop.

The optimal values for these two thresholds can be setup experimentally and offline, through Self Configuring solutions. The objective is to maximize the beamforming gain, with the constraint of minimal beamforming misalignment. This tradeoff can be simply captured by maximizing the user throughput.

An example of implementation for a fine tuning of these thresholds, that is done 'offline', during an experimental phase, can be based on optimization theory methods to find the global optimum of a function to maximize. Different functions to maximize can be considered. The objective is to maximize for all the users, (or x% of these users), the beamforming gain, or the SINR, while minimizing the beam misalignment probability. For example, we can maximize the aggregation of averaged user throughput using the following formula:

$$F(First\ Threshold, Second\ Threshold) = \sum_{k=1}^{N} u\_th_k$$

With $u\_th_k$, being the user throughput of user $k$

In other embodiment the following formula can be used:

$$F(First\ Threshold, Second\ Threshold) = \prod_{k=1}^{N} e^{-prob\_BeamMisalignment_k} . SINR_k$$

With:

- *prob_BeamMisalignment* being the probability of beam misalignment. The probability of beam misalignment can be estimated by the ratio: the time during the serving user beam is not appropriate out of the time during which the user beam is the relevant one.
- $SINR_k$ being the Signal to Interference and Noise ratio at user $k$.

The first and second threshold can be determined using Simulated Annealing (SA) principles. Simulated annealing is a well-known meta heuristic method for solving a complex global optimization problem: maximize (or minimize) a function. The main advantages of using SA compared to other methods is that it can deal with non-linear, non-differentiable problems with local optima. Simulated Annealing is inspired from the annealing process in metallurgy where the metal is heated then cooled before being frozen in the desired state: when the looked-for material properties are met (like hardness, flexibility). The system, via the method described below, is controlled by the temperature *T*:

• When temperature is high, large bounces (system changes) are allowed.

• When temperature is low, less random movements from one state to another is tolerated.

The system is then frozen to the stable optimal state.

To determine the first of second threshold of the method of the present subject matter the following step can be used:

1. The algorithm starts with an initial random state: $S =$
(*First Threshold, Second Threshold*)
2. The resulting objective function is calculated: $F(S)$
3. A neighboring random solution is then generated: $S' = Neighbour(S)$
4. The objective function is then re-evaluated on this updated state: neighbor to S: $F(S')$
5. If $F(S') > F(S)$ then update the state: $S := S'$
If $F(S') < F(S)$ then, update the state with an acceptance probability (even if it outputs a worse objective function, but this is to avoid being stuck in a local optimum):

Accept with probability: $\exp\left(-\frac{\Delta}{T}\right)$ with $\Delta = F(S) - F(S')$ and *T*, the Temperature.

Reject with probability: $1 - \exp(-\frac{\Delta}{T})$

Note: indeed, at high temperatures, the new state can be accepted even with high $\Delta$ variations. At low temperatures, the new state is accepted only when the measured variations: $\Delta$ are small.

6. Adjust the temperature: for example, $T = \alpha.T$, with $\alpha$ a constant (the cooling factor) and Go to step 2.

With the method of the previous section, the temperature is initialized at a fixed value $T_0$. Experimentations realized offline can help improving this fixed value. This initialization value must be high enough in order to allow each solution determined at the beginning of the method to be accepted with a probability of almost 1. After that this temperature can be up-dated using different solutions. For example using the formula $T = \alpha.T$ wherein $\alpha$ est fixed parameter comprises between 0.8 and 0.99. One other formula can be $T_k = T_0.\alpha^k$ wherein $k$ is the temperature cycle, this formula is also known as "Exponential multiplicative cooling".

In some other implementation/variation of the method of the previous section, the cooling schedule part of the method can interact several times using the same temperature. The steps 2 and 5 of the method of the section 27 are then realized L times using the same temperature and after that the cooling schedule is used.

In an embodiment the method of section 27 stops when the number of iterations is reached or when $F$(*First Threshold, Second Threshold*) > *Target*, or when the function $F$(*First Threshold, Second Threshold*) converges toward a maximal with only small oscillations.

By measurements we mean power measurement on Reference Signals that are transmitted on different directions, over different beams. These reference signals are Beam Reference Signals (BRS) or Beam Refinement Reference Signals (BRRS), as specified in SIGs for Verizon Wireless and Korean Telecom. The SIG for Verizon Wireless can be obtain in the website http://www.5gtf.org/ and the SIG for Korean Telecom can be obtain in the website https://www.kt.com/eng/biz/kt5g_02.jsp.

By beam switching rate, we mean the frequency of changing the best serving beam on a given beamwidth for a given user. This is an indication that the considered beamwidth is or is not the relevant one, given current mobility characteristics of the user or the environment. Beam switching rate can be calculated by the ratio of the number best serving beam changes at a given beamwidth to the observation duration.

In an embodiment if the beam switching rate is comprised between the first and second threshold a step of keeping the same beamwidth is realized.

In other words the previously described method relies on appropriate beamwidth adaptation, depending on the user/environment mobility profile, captured through beam switching statistics and rate metric. Supposing that multi-resolution precoding is enabled, the BS has the capability to transmit over beams with quantized different beamwidths:

- Large beamwidths (so large beam coverage) are to be assigned to users with high beam switching rate. Purpose is to guarantee stability, avoid beam misalignment, guarantee coverage performances between consecutive beam updating periods, (this is achieved at the expense of data rate),
- Smaller beamwidths are preferred for low / medium beam switching rates users. Purpose is to take profit of higher beamforming gain, higher Multi Users capacity gain, enabled by refined beamwidths.

The method of the present subject matter relies on adaptive precoding beam selection process (by adaptive precoding beam selection process we mean a process consisting iteratively, in selecting from a pre-set multi-resolution codebook, the best beam precoding(s) with a given 'optimal' resolution (beamwidth) to achieve beamforming gain, with guaranteed stability relative to beam switching rate, misalignment risks, etc.). Within this method a multi-resolution codebook is used to obtain the different precoding beams. By multi-resolution codebooks we mean a set of precoding beams with given resolution (quantized beamwidths). Within this method the selected precoding beam has a beamwidth function of the user beam switching statistics.

Within the next sections of this divulgation the following notations will be used:

$B_b$ : the current beam, on selected beam iteration $b$ (similarly, beamwidth resolution).

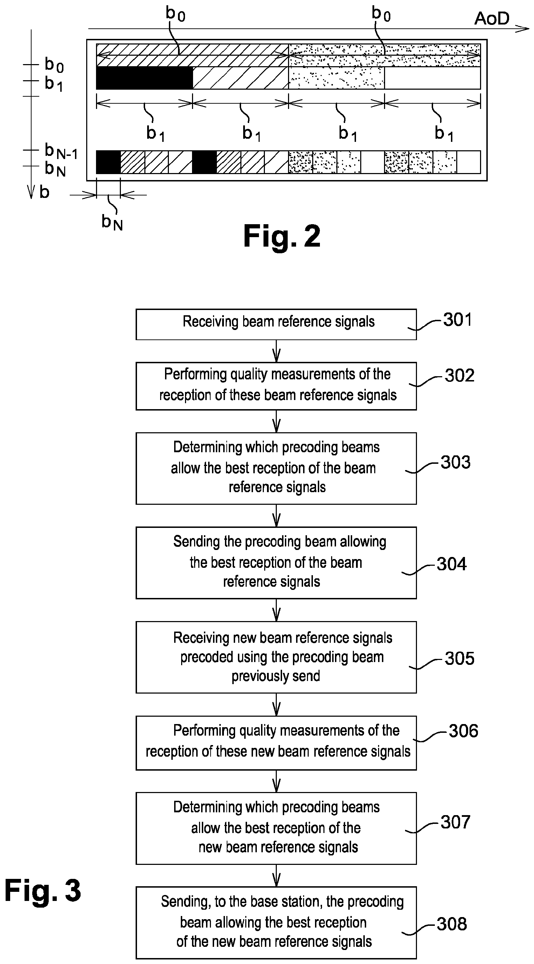

$b : b \in \{b_0, ..., b_N\}$ - See Figure 2.

$B_b^n$ : Neighbor candidate beam $n$ ($n < K$, maximum number of candidate beams), on the current beamwidth resolution $b$.

$S_b$, $S_b^n$, $S_b^*$: respectively the beam state measurement on the current beam, on the neighbor candidate alternative beam $n$ and best beam state over the current, neighbor candidate beams.

$L$: Number of beam measurements reported to the Base Station.

$R_b$ : beam switching rate for the current selected beamwidth b.

$n\_sw_b$ : Number of switching occurrences.

$R^{ref}$, $R^{Max}$ : Reference beam switching rate threshold, Maximum beam switching rate.

$\Delta_r$: Hysteresis like threshold on beam switching rate.

$\Delta_s$: Hysteresis like threshold on beam measurements.

Using the previously presented notations, the method of the present subject matter can be expressed as the following step:

- **Step 1:** Set $b = b_0$, perform beam acquisition: select $B_b$.
- **Step 2:** UE performs measurements on $B_b$ and $\{B_b^n, n = 1 \ldots K\}$ and reports the current and L best beam measurements: $S_b$ and $\{S_b^m, m = 1 \ldots L\}$ Note: beam measurements have been configured by the BS.
- **Step 3:** Rank the current and best beams, and update switching statistics, beam selection. Supposing: beam measurement is Beam RSRP, SNR:

$$\text{If } S_b^* > S_b + \Delta_s$$
$$B_b = B_b^*$$
$$n\_sw_b = n\_sw_b + 1$$
$$\text{If time} \equiv 0 \, [T] \text{ (This is time to update switching rate):}$$

$$R_b = \frac{n\_sw_b}{T}$$

$$n\_sw_b = 0$$

- **Step 4:** Fallback

$$\text{If } \ R_b > R^{Max} \text{ Go to Step 1}$$

- **Step 5:** Increase beamwidth

$$\text{If } \ R_b > R^{ref} + \Delta_r \text{ or if } R_b > First\ Threshold$$
$$b = b - 1$$
$$B_b \text{ and } \{B_b^n, n = 1 \ldots K\} \text{ are updated}$$
$$\text{Go to Step 2}$$

- **Step 6:** Decrease Beamwidth

$$\text{If } R_b < R^{ref} - \Delta_r \text{ or if } R_b < Second\ Threshold$$
$$b = b + 1 \text{ (Beam refinement)}$$
$$B_b \text{ and } \{B_b^n, n = 1 \dots K\} \text{ are updated}$$
$$\text{Go to Step 2}$$

The present subject matter also comprises a method to exchange information between a user equipment and a base station in order to select a precoding beam. This method is described figure 3 and from the point of view of the user equipment comprises the following iterative steps:

> A step 301 of receiving, from the base station, beam reference signals

> A step 302 of performing quality measurements of the reception of these beam reference signals

> A step 303 of determining which precoding beams allow the best reception of the beam reference signals

> A step 304 of sending, to the base station, the precoding beam allowing the best reception of the beam reference signals

> A step 305 of receiving, form the base station, new beam reference signals precoded using the precoding beam previously send

> A step 306 of performing quality measurements of the reception of these new beam reference signals

> A step 307 of determining which precoding beams allow the best reception of the new beam reference signals

> A step 308 of sending, to the base station, the precoding beam allowing the best reception of the new beam reference signals

The iterative process stops when the lowest beamwidth is reached for a beam switching rate that do not exceed a preset upper bound.
This method can be applied to any precoding beams (either digital, hybrid or analog) with multiple possible beamwidths. Per beamwidth, there is a set of precoders to cover a given spatial area (in azimuth and elevation).
An embodiment of the present subject matter is a user equipment. This user contains different modules configured to realize the method of the figure 3. This user equipment comprises receiving means and transmission means. The receiving means are configured:

- to receive, from the base station, beam reference signals and
- to receive, form the base station, new beam reference signals precoded using the precoding beam previously sent.

The transmissions means are configured:

- to send, to the base station, the precoding beam allowing the best reception of the beam reference signals and
- to send, to the base station, the precoding beam allowing the best reception of the new beam reference signals.

The user equipment also comprises a plurality of modules. These modules are configured:

- to perform quality measurements of the reception of these beam reference signals and
- to determine which precoding beams allow the best reception of the beam reference signals and
- to perform quality measurements of the reception of these new beam reference signals and to determine which precoding beams allow the best reception of the new beam reference signals.

The different modules will be realized by one or more processors and one or more memory. The module may also be realized by the use of dedicated hardware as well as hardware capable of executing software in association with appropriate software. When provided by a processor, the modules may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

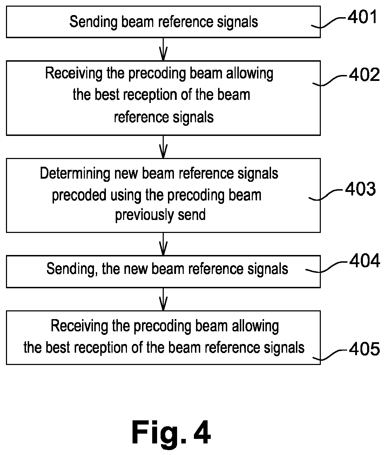

The figure 4 presents the method of the figure 3 from the point of view of the base station. This method comprises the following iterative steps:

A step 401 of sending, to the user equipment, beam reference signals

A step 402 of receiving, from the user equipment, a precoding beam allowing the best reception of the beam reference signals

A step 403 of determining new beam reference signals precoded using the precoding beam previously received

A step 404 of sending, to the user equipment, the new beam reference signals precoded using the precoding beam previously send

A step 405 of receiving, from the user equipment, a precoding beam allowing the best reception of the new beam reference signals

The iterative process stops when the lowest beamwidth is reached for a beam switching rate that do not exceed a pre-set upper bound.

This method can be applied to any precoding beams (either digital, hybrid or analog) with multiple possible beamwidths. Per beamwidth, there is a set of precoders to cover a given spatial area (in azimuth and elevation).

An embodiment of the present subject matter is a base station. This base stations contains different modules configured to realize the method of the figure 4. This base station comprises receiving means and transmission means. The receiving means are configured:

- to receive, from the user equipment, the precoding beam allowing the best reception of the beam reference signals and
- to receive, from the user equipment, the new precoding beam allowing the best reception of the beam reference signals

The transmissions means are configured:

- to send, to the user equipment, beam reference signals and
- to send, to the user equipment, the new beam reference signals precoded using the precoding beam previously sent

This base station also comprises a plurality of modules. These modules are configured to determine new beam reference signals precoded using the precoding beam previously received.

The different modules will be realized by one or more processors and one or more memory. The module may also be realized by the use of dedicated hardware as well as hardware capable of executing software in association with appropriate software. When provided by a processor, the modules may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

An embodiment of the subject matter is a computer-readable medium having embodied thereon a computer program configured to realize the method, presented figure 1, to select a precoding beam among a set of possible precoding beams. This method comprises an initial step 101 of selecting one of the possible beamwidths. After that the method comprises the following iterative steps:

- a step 102 of determining measurements associated to precoding beams having this selected beamwidth and
- a step 103 of selecting the current precoding beam as the one, among the precoding beams having this selected beamwidth, with the best measurement and
- a step 104 of updating the measurements associated to the precoding beams having the selected beamwidth and

Furthermore and if one of the measurement associated to one of the precoding beams, having the selected beamwidth, is above the measurement associated to the current precoding beam, the method comprising

- a step 105 of changing the current precoding beam to the one with the measurements above the measurements associated to the former current precoding beam
- a step 106 of updating a beam switching rate and

  - when the beam switching rate is above a first threshold a step 107 of increasing the selected beamwidth.

  - when the beam switching rate is below a second threshold a step 108 of decreasing the selected beamwidth.

**Claims**

1. A user equipment configured to perform the following iterative steps:

   • a step (301) of receiving, from a base station, beam reference signals;
   • step (302) of performing quality measurements of the reception of these beam reference signals;
   • a step (303) of determining which precoding beams allow the best reception of the beam reference signals;
   • a step (304) of sending, to the base station, the precoding beam allowing the best reception of the beam reference signals;
   • a step (305) of receiving, form the base station, new beam reference signals precoded using the precoding beam previously sent;
   • a step (306) of performing quality measurements of the reception of these new beam reference signals;
   • a step (307) of determining which precoding beams allow the best reception of the new beam reference signals; and
   • a step (308) of sending, to the base station, the precoding beam allowing the best reception of the new beam reference signals.

2. The user equipment of claim 1, wherein the iterative steps stop when the lowest beamwidth is reached for a beam switching rate that do not exceed a pre-set upper bound.

3. The user equipment of claim 1, wherein the precoding beams are digital, hybrid or analog.

4. A user equipment comprising:

   a receiving means for receiving (301), from a base station, beam reference signals;
   a plurality of modules for performing (302) quality measurements of the reception of these beam reference signals;

the plurality of modules further determining (303) which precoding beams allow the best reception of the beam reference signals;

a transmission means for sending (304), to the base station, the precoding beam allowing the best reception of the beam reference signals;

the receiving means further receiving (305) from the base station, new beam reference signals precoded using the precoding beam previously sent;

the plurality of modules further performing (306) quality measurements of the reception of these new beam reference signals;

the plurality of modules further determining (307) determining which precoding beams allow the best reception of the new beam reference signals; and

the transmission means further sending (308), to the base station, the precoding beam allowing the best reception of the new beam reference signals.

5. The user equipment of claim 4, wherein the precoding beams are digital, hybrid or analog.

6. A base station configured to perform the following iterative steps:

   • a step 401 of sending, to a user equipment, beam reference signals;
   • a step 402 of receiving, from the user equipment, a precoding beam allowing the best reception of the beam reference signals;
   • a step 403 of determining new beam reference signals precoded using the precoding beam previously received;
   • a step 404 of sending, to the user equipment, the new beam reference signals precoded using the precoding beam previously send; and
   • a step 405 of receiving, from the user equipment, a precoding beam allowing the best reception of the new beam reference signals.

7. The base station of claim 6, wherein the iterative steps stop when the lowest beamwidth is reached for a beam switching rate that do not exceed a pre-set upper bound.

8. The base station of claim 6, wherein the precoding beams are digital, hybrid or analog.

9. A base station comprising:

   a transmissions means for sending (401), to a user equipment, beam reference signals;
   the receiving means further receiving (402), from the user equipment, a precoding beam allowing the best reception of the beam reference signals;
   a plurality of modules for determining (403) new beam reference signals precoded using the precoding beam previously received;
   the transmission means further sending (404), to the user equipment, the new beam reference signals precoded using the precoding beam previously send; and
   the receiving means further receiving (405), from the user equipment, a precoding beam allowing the best reception of the new beam reference signals.

10. The base station of claim 9, wherein the precoding beams are digital, hybrid or analog.

Initial step 101 of selecting one of
the possible beamwidths ⌐101

Determination of measurements ⌐102
associated to precoding beams

Selection of the current precoding ⌐103
beam as the one with the best measurements

Updating the measurements ⌐104
associated to the precoding beams

one of the updated
measurements above
the current precoding
beam measurements? — No

Yes

Changing the current precoding
beam to the one with the
measurements above the former ⌐105
precoding beam measurements

Updating a beam switching rate ⌐106

107                                              108
Switching rate > threshold 1        Switching rate < threshold 2

Increasing selected beamwidth        Decreasing selected beamwidth

# Fig. 1

**Fig. 2**

| | |
|---|---|
| Receiving beam reference signals | 301 |

$\downarrow$

| | |
|---|---|
| Performing quality measurements of the reception of these beam reference signals | 302 |

$\downarrow$

| | |
|---|---|
| Determining which precoding beams allow the best reception of the beam reference signals | 303 |

$\downarrow$

| | |
|---|---|
| Sending the precoding beam allowing the best reception of the beam reference signals | 304 |

$\downarrow$

| | |
|---|---|
| Receiving new beam reference signals precoded using the precoding beam previously send | 305 |

$\downarrow$

| | |
|---|---|
| Performing quality measurements of the reception of these new beam reference signals | 306 |

$\downarrow$

| | |
|---|---|
| Determining which precoding beams allow the best reception of the new beam reference signals | 307 |

$\downarrow$

**Fig. 3**

| | |
|---|---|
| Sending, to the base station, the precoding beam allowing the best reception of the new beam reference signals | 308 |

```
┌─────────────────────────────────────────┐
│      Sending beam reference signals       │──401
└─────────────────────────────────────────┘
                    ↓
┌─────────────────────────────────────────┐
│    Receiving the precoding beam allowing   │──402
│         the best reception of the beam      │
│              reference signals              │
└─────────────────────────────────────────┘
                    ↓
┌─────────────────────────────────────────┐
│    Determining new beam reference signals   │──403
│      precoded using the precoding beam      │
│              previously send               │
└─────────────────────────────────────────┘
                    ↓
┌─────────────────────────────────────────┐
│      Sending, the new beam reference signals │──404
└─────────────────────────────────────────┘
                    ↓
┌─────────────────────────────────────────┐
│    Receiving the precoding beam allowing    │
│  the best reception of the beam reference signals │──405
└─────────────────────────────────────────┘
```

# Fig. 4

Europäisches
Patentamt

European
Patent Office

Office européen
des brevets

**DECLARATION**

Application Number

which under Rule 63 of the European Patent Convention EP 19 19 0205
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason: | INV.<br>H04B7/06 |

1        Claim 1 reads:
A user equipment configured to perform the following iterative steps:
a step (301) of receiving, from a base station, beam reference signals;
step (302) of performing quality measurements of the reception of these beam reference signals;
a step (303) of determining which precoding beams allow the best reception of the beam reference signals;
a step (304) of sending, to the base station, the precoding beam allowing the best reception of the beam reference signals;
a step (305) of receiving, form the base station, new beam reference signals precoded using the precoding beam previously sent;
a step (306) of performing quality measurements of the reception of these new beam reference signals;
a step (307) of determining which precoding beams allow the best reception of the new beam reference signals; and
a step (308) of sending, to the base station, the precoding beam allowing the best reception of the new beam reference signals.
2        According to step 305, new beam reference signals are received using the , i.e. one, precoding beam.
    According to step 306, quality measurements take place on the new beam reference signals. They were all precoded using the one, i.e. the same precoding beam, see step 305.
    In is thus unclear how, in step 307, the user equipment can determine
                              -/--

| Place of search | Date | Examiner |
|---|---|---|
| Munich | 20 January 2020 | Bauer, Frédéric |

EPO FORM 1504 (P04F37)

Europäisches
Patentamt

European
Patent Office

Office européen
des brevets

**DECLARATION**

Application Number

which under Rule 63 of the European Patent Convention EP 19 19 0205
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason:<br><br>    which precoding beam allows for the best reception, because all reference signals were sent using the same reference beam.<br>3    The same objection applies mutatis mutandis to the remaining independent claims.<br>4    Because all independent claim contain a contradiction, the patent application fails to such an extent to comply with the requirement of clarity (Art. 84 EPC) that it is impossible to carry out a meaningful search regarding the state of the art on the basis of the claimed subject-matter, Rule 63 EPC.<br><br>The applicant's attention is drawn to the fact that a search may be carried out during examination following a declaration of no search under Rule 63 EPC, should the problems which led to the declaration being issued be overcome (see EPC Guideline C-IV, 7.2). | |

EPO FORM 1504 (P04F37)

| Place of search | Date | Examiner |
|---|---|---|
| Munich | 20 January 2020 | Bauer, Frédéric |